# EUROPÄISCHE PATENTSCHRIFT

(11) **EP 4 387 803 B1**
(45) Veröffentlichungstag und Bekanntmachung des Hinweises auf die Patenterteilung: **06.08.2025**
(21) Anmeldenummer: 22765032.2
(22) Anmeldetag: 09.08.2022
(51) Int. Cl.: B23K 20/12, B23K 20/227, B23K 103/20

(54) **SCHWEISSEINRICHTUNG UND SCHWEISSVERFAHREN**
WELDING DEVICE AND WELDING METHOD
DISPOSITIF ET PROCÉDÉ DE SOUDAGE

(30) Priorität: 17.08.2021 DE 102021121367
(43) Veröffentlichungstag der Anmeldung: 26.06.2024
(73) Patentinhaber: KUKA Deutschland GmbH, 86165 Augsburg (DE)
(72) Erfinder: RICHTER, Bernd, 86343 Königsbrunn (DE); GAO, Junhua, 86159 Augsburg (DE); CARSTENS, Jan, 86153 Augsburg (DE); FROEHLKE, Stefan, 86199 Augsburg (DE)
(74) Vertreter: Oelke, Jochen
(86) Internationale Anmeldenummer: PCT/EP2022/072312
(87) Internationale Veröffentlichungsnummer: WO 2023/020888

(56) Entgegenhaltungen:
- DE-C1- 10 139 687
- KR-B1- 102 265 585
- US-A1- 2018 221 986

## Beschreibung

Die Erfindung betrifft eine Schweisseinrichtung und ein Verfahren zum FSW-Schweissen von Werkstücken mit unterschiedlich hohen Reibschmelztemperaturen mit den Merkmalen in den selbstständigen Sach- und Verfahrensansprüchen.

Eine solche FSW-Schweisseinrichtung und ein FSW-Schweissverfahren sind aus der WO 2017/167964 A1 bekannt. Die FSW-Schweisseinrichtung dient zum Rührreibschweissen bzw. FSW-Schweissen von Werkstücken mit unterschiedlich hohen Reibschmelztemperaturen und weist ein FSW-Schweisswerkzeug mit einem rotierend angetriebenen FSW-Schweisselement in Form eines FSW-Schweissstifts auf. Ferner ist eine Detektionseinrichtung vorhanden, die beim Schweissprozess an der Reibschweissstelle einen Reibkontakt des FSW-Schweisselements mit dem höher schmelzenden Werkstück detektiert. Die Detektionseinrichtung weist einen Schwingungssensor auf, der bei einem solchen Reibkontakt auftretende Vibrationen erfasst und deren Frequenz und/oder Amplitude misst.

Anhand der Messergebnisse kann die Stärke der Kontaktierung und/oder die Höhe der Anpresskraft des FSW-Schweissstifts am höher schmelzenden Werkstück geregelt werden.

Die US 2018/221986 A1 (Basis für den Oberbegriff der Ansprüche 1 und 8) beschreibt ein Reibschweißgerät mit einem Temperatursensor im Vorsprung des Schweißwerkzeugs.

Während des Schweißens steuert das Steuergerät die Dreh- und Bewegungsgeschwindigkeit des Werkzeugs, um die Temperatur innerhalb eines vorgegebenen Bereichs zu halten und somit die Schweißqualität zu gewährleisten.

Die DE 101 39 687 C1 beschreibt Reibrührwerkzeug zum Reibschweißen, das mit genügender Messgenauigkeit nach der Temperatur in der Schweißzone steuerbar ist, wobei die Temperaturwerte in der Schweißzone mit einem Temperatursensor erfasst werden, der mit seiner Messstelle in dem Pin des Reibrührwerkzeugs angeordnet ist.

Die KR 102 265 585 B1 beschreibt ein Reibschweißwerkzeug mit einstellbarer Sondenlänge und Schulterrillentiefe. Ein Träger aus einem Material mit geringer Wärmeleitfähigkeit ist so gekoppelt, dass die Wärmeleitung zwischen der Sonde und dem Schaft gehemmt wird. Dies ermöglicht eine präzisere Steuerung des Schweißprozesses und verbessert die Qualität der Schweißnähte.

Es ist Aufgabe der vorliegenden Erfindung, eine FSW-Schweisseinrichtung und ein FSW-Schweissverfahren mit einer verbesserten Detektionstechnik zur Erfassung eines Reibkontakts des FSW-Schweisselements mit dem höher schmelzenden Werkstück zu erfassen.

Die Erfindung löst diese Aufgabe mit einer FSW-Schweisseinrichtung und einem FSW-Schweissverfahren und den Merkmalen in den selbstständigen Vorrichtungs- und Verfahrensansprüchen.

Die Erfindung bezieht sich auf das sogenannte FSW-Schweissen, welches in der deutschen Sprache auch als Rührreibschweissen und in englischer Sprache als Friction-Stir-Welding (abgekürzt FSW) bezeichnet wird.

Kontaktierte Werkstückbereiche, insbesondere Werkstückränder, der bevorzugt zwei, drei oder mehr zu schweissenden Werkstücke werden durch das bewegte FSW-Schweisselement und durch die Reibbewegung sowie die dabei entwickelte Reibwärme an der FSW-Reibstelle plastifiziert und verbinden sich danach unter Bildung einer FSW-Schweissnaht. Die FSW-Reibstelle ist diejenige Stelle zwischen den zu schweissenden Werkstücken, an der sich das bewegte, rotierende, FSW-Schweisselement bei seiner Vorschubbewegung entlang einer vorgegebenen Reib FSW-Schweissbahn gerade befindet und das Plastifizieren der Werkstücke unter Verdrängung des Werkstückmaterials bewirkt. Hinter dem vorgeschobenen FSW-Schweisselement fließen die plastifizierten Werkstückmaterialien wieder zusammen und bilden die FSW-Schweissnaht.

Die Erfindung bezieht sich ferner auf das FSW-Schweissen von Werkstücken mit wesentlich unterschiedlich hohen Schmelz- und Plastifizierungstemperaturen. Dies können z.B. Werkstücke aus Stahl und aus einem Leichtmetall sein, insbesondere einer Aluminiumlegierung. Der Unterschied der Schmelztemperaturen beträgt z.B. 200°C oder mehr, bevorzugt 500°C oder mehr. Bei einer FSW-Paarung von Stahl und einer Alminiumlegierung liegt der Unterschied bei ca. 900°C.

Das FSW-Schweissen und die Plastifizierung der Werkstückmaterialien finden bei Plastifizierungstemperaturen unterhalb der Schmelztemperatur statt. Maßgeblich ist die Plastifizierungstemperatur.

Die Verhältnisse der Schmelz- und Plastifizierungstemperaturen sind bei den Werkstücken ähnlich. Das Werkstückmaterial mit der höheren Schmelztemperatur hat auch die höhere Plastifizierungstemperatur als das Werkstückmaterial mit der niedrigeren Schmelztemperatur und der niedrigeren Plastifizierungstemperatur. Nachfolgend wird der Einfachheit halber bei der Charakterisierung der Werkstücke auf die Schmelztemperatur abgestellt. Das Werkstück bzw. Werkstückmaterial mit der höheren Schmelz- und Plastifizierungstemperatur wird nachfolgend als höher schmelzendes Werkstück bzw. Werkstückmaterial und das Werkstück bzw. Werkstückmaterial mit der niedrigeren Schmelz- und Plastifizierungstemperatur wird nachfolgend als niedriger schmelzendes Werkstück bzw. Werkstückmaterial bezeichnet.

Das FSW-Schweissen kann mit unterschiedlichen Anordnungen der Werkstücke an der FSW-Reibstelle, z.B. mit Stumpfstoss oder mit Überlappstoss, durchgeführt werden. Das FSW-Schweissen von Kehlnähten ist ebenfalls möglich. Die zu schweissenden Werkstücke können z.B. eine plattenartige Form haben. Sie können auch eine andere Form haben. Die FSW-Schweissbahn ist entlang des Stossbereichs bzw. Kontaktbereichs zwischen den zu schweissenden Werkstücken gerichtet.

Beim FSW-Schweissen von Stumpfstössen oder von Überlappstössen wird das FSW-Schweisselement im wesentlichen senkrecht zu der Hauptebene der Werkstücke ausgerichtet, die beim Stumpfstoss nebeneinander und beim Überlappstoss übereinander liegen. Das FSW-Schweisselement kann dabei exakt senkrecht zur besagten Hauptebene ausgerichtet sein. Es kann auch eine geringe Vorschubneigung haben von z.B. bis zu 3° gegen die Richtung der FSW-Schweissbahn.

Beim FSW-Schweissen von Kehlnähten wird das FSW-Schweisselement schräg in den Stossbereich bzw. in die Kehle gerichtet, die zwischen den mit einem Kehlwinkel von z.B. 90° zueinander ausgerichteten Werkstücken ausgebildet ist. Das FSW-Schweisselement kann z.B. entlang der Winkelhalbierenden des Kehlwinkels zwischen den Werkstücken gerichtet sein. Das FSW-Schweisselement kann dabei rechtwinklig zum Stossbereich bzw. zur FSW-Schweissbahn ausgerichtet sein oder kann die besagte Vorschubneigung haben.

Es wird angestrebt, beide Werkstücke an der FSW-Reibstelle zu plastifizieren, um eine gute Schweissqualität zu erreichen. Hierfür soll das FSW-Schweisselement auch das höher schmelzenden Werkstück hinreichend reibend kontaktieren und an der FSW-Reibstelle plastifizieren.

Beim FSW-Schweissen wird das FSW-Schweisselement bevorzugt zuerst mit dem niedriger schmelzende Werkstück in Eingriff gebracht und danach an das höher schmelzende Werkstück zugestellt und mit diesem in Reibkontakt gebracht. Dies hat Vorteile für die genaue Detektion des Reibkontakts mit dem höher schmelzende Werkstück.

Die Eingriffstiefe des FSW-Schweisselement an den unterschiedlich schmelzenden Werkstücken bzw. Werkstückmaterialien kann unterschiedlich groß sein. Vorzugsweise ist die Eingriffstiefe am höher schmelzenden Werkstück bzw. Werkstückmaterial kleiner, insbesondere um ein Vielfaches kleiner, als die Eingriffstiefe am niedriger schmelzenden Werkstück bzw. Werkstückmaterial.

Die beanspruchte Detektionstechnik mit einer thermoelektrischen Messeinrichtung detektiert den besagten Reibkontakt des FSW-Schweisselements mit dem höher schmelzenden Werkstück mittels einer thermoelektrischen Erfassung der Reibtemperatur an den zu schweissenden zwei oder mehr Werkstücken. Es kann eine Änderung der Reibtemperatur detektiert werden. Bei einem Zustellen des FSW-Schweisselements zu Beginn des Schweissprozesses kann thermisch detektiert werden, ob der gewünschte Reibkontakt hergestellt wird bzw. besteht. Beim weiteren Verlauf des Schweissprozesses kann thermisch detektiert werden, ob der Reibkontakt in der gewünschten Form beibehalten wird oder verloren geht. Die Detektionsgenauigkeit ist umso besser, je größer der Unterschied der Schmelztemperaturen und auch der Plastifizierungstemperaturen der Werkstücke ist.

Bei Bestehen des besagten Reibkontakts mit dem Werkstück, welches eine höhere Schmelztemperatur als das andere Werkstück aufweist, steigt die Temperatur an der FSW-Reibstelle an bzw. hat die Temperatur ein hohes Temperaturniveau. Wenn der besagte Reibkontakt mit dem höher schmelzenden Werkstück nicht besteht oder verloren geht und das FSW-Schweisselement nur noch mit dem niedriger schmelzenden Werkstück in einem Reibkontakt steht, sinkt die Temperatur an der FSW-Reibstelle bzw. Prozessstelle. Die besagten Temperaturänderungen können das Bestehen und ggf. die Stärke eines Reibkontakts des FSW-Schweisselements mit dem höher schmelzenden Werkstück signalisieren. Die Temperaturänderungen können für eine Regelung des FSW-Schweissprozesses, insbesondere beim FSW-Bahnschweissen, benutzt werden.

Ein Reibkontakt des FSW-Schweisselements mit dem höher schmelzenden Werkstück kann zusätzlich auf andere Weise detektiert werden. Dies kann z.B. durch eine Erfassung und Überwachung der Zustellkraft und/oder durch einen Schwingungssensor und/oder durch einen Temperatursensor erfolgen.

Die beanspruchte thermoelektrische Detektionstechnik hat den Vorteil einer geringeren Störanfälligkeit und besseren Detektionsgenauigkeit von Reibkontaktänderungen gegenüber dem Stand der Technik. Die beanspruchte Detektionstechnik ist auch unempfindlicher gegenüber Umwelteinflüssen, z.B. Klimaschwankungen, Störschwingungen von benachbarten anderen Maschinen oder dgl..

Die thermoelektrische Messeinrichtung kann mit Vorteil den Seebeck-Effekt nutzen und als sogenannte Seebeck-Messeinrichtung ausgebildet sein. Sie kann einen elektrischen Messkreis mit einem elektrischen Messelement zur messtechnischen Erfassung der durch den Seebeck-Effekt im Messkreis induzierten elektrischen Energie aufweisen.

Durch den Seebeck-Effekt können besonders gut, sensibel und reaktionsschnell Temperaturänderungen erfasst werden, die mit Änderungen des Reibkontakts einher gehen. Hierfür ist es günstig, mit geringen Eingriffstiefen des FSW-Schweisselements am höher schmelzenden Werkstück zu arbeiten. Diese können z.B. bei ca. 0,2 bis 0,5 mm, bevorzugt 0,2 bis 0,3 mm, liegen.

Bei dem besagten Seebeck-Effekt entsteht in einem Stromkreis aus zwei verschiedenen elektrischen Leitern bei einer Temperaturdifferenz zwischen den Kontaktstellen der Leiter eine elektrische Spannung. Diese wird auf Thermodiffusionsströme in einem Material zurückgeführt. Am heissen Ende eines elektrischen Leiters sind mehr Elektronen mit hoher Energie vorhanden, die sich durch Diffusion zum kalten Ende des elektrischen Leiters bewegen. Die ebenfalls vorhandenen Elektronen mit wenig Energie bewegen sich in die entgegengesetzte Richtung. Dies stellt sich als Wärmeleitung durch Elektronen dar. Ein eventuelles Ungleichgewicht der Ströme wird durch ein elektrisches Feld ausgeglichen. Die entstehende Spannung ist die Seebeck-Spannung. Diese kann von dem elektrischen Messelement erfasst und ggf. ausgewertet sowie an eine elektrische Steuerung gemeldet werden.

Die beanspruchte Schweisseinrichtung kann eine automatische Handhabungseinrichtung mit einer Steuerung umfassen. Die Handhabungseinrichtung kann das FSW-Schweisswerkezug beim Schweissprozess halten und führen und dabei eine Relativbewegung zwischen den zu schweissenden Werkstücken und dem FSW-Schweisswerkzeug entlang einer vorgegebenen FSW-Schweissbahn mit Reibkontakt des FSW-Schweisselements zu den unterschiedlich schmelzenden Werkstücken erzeugen. Dieses automatische Bahnschweissen kann mit unterschiedlichen Stossformen, insbesondere mit Überlappstoss oder Stumpfstoss, der Werkstücke durchgeführt werden.

Beim Überlappstoss-Schweissen wird das bewegte, rotierende, FSW-Schweisselement zuerst an das niedriger schmelzende Werkstück zugestellt und durchdringt dieses, bis der Reibkontakt zum höher schmelzenden Werkstücke entsteht. Beim Stumpfstoss-Schweissen wird das bewegte, rotierende, FSW-Schweisselement z.B. mit seitlichem Versatz zum Stossbereich bzw. zur FSW-Schweissbahn zuerst an das niedriger schmelzende Werkstück zugestellt und dann durch eine Seitenbewegung an das höher schmelzenden Werkstücke herangeführt und in Reibkontakt gebracht. In beiden Fällen wird der entstehende Reibkontakt thermoelektrisch detektiert.

Die thermoelektrische Messeinrichtung kann mit der Steuerung der automatischen Handhabungseinrichtung verbunden sein. Dies ermöglicht z.B. eine überwachte und ggf. geregelte Bahnverfolgung beim FSW-Schweissen. Wenn durch die thermoelektrische Messeinrichtung ein Nichtbestehen oder ein Verlust des besagten Reibkontakts mit dem höher schmelzenden Werkstück detektiert wird, kann die Handhabungseinrichtung das FWS-Schweisswerkzeug an die FSW-Schweissbahn heranführen oder zurückführen. Bei einem Stumpfstoss-Schweissen kann dies eine seitliche Zustell- oder Rückführbewegung an die FSW-Schweissbahn sein, die zwischen den kontaktierenden Werkstückrändern angeordnet ist. Bei einem Überlappstoss-Schweissen kann die Handhabungseinrichtung das FSW-Schweisswerkzeug mittels einer bevorzugt drehfesten Werkzeugschulter durch das niedriger schmelzende Werkstück an die FSW-Schweissbahn andrücken, die zwischen den übereinander liegenden Kontaktflächen der Werkstücke ausgebildet ist. Durch das Nachdrücken können auch eventuelle Dickenabweichungen des niedriger schmelzenden Werkstücks ausgeglichen werden.

Die thermoelektrische Detektion des Reibkontakts mit dem höher schmelzenden Werkstück ermöglicht eine Prozessüberwachung und eine Qualitätssicherung beim FSW-Schweissprozess. Die Temperatur- und Reibkontaktdaten können gespeichert und ausgewertet werden. Das kann mit Bezug zu Zeit und/oder FSW-Schweissbahnweg bzw. FSW-Bahnposition oder FSW-Schweissnahtposition erfolgen. Für eine akzeptable FSW-Schweissqualität muss über einen Mindestweg bzw. über eine Mindestlänge der FSW-Schweissnaht von z.B. 90% der Gesamtlänge ein Reibkontakt detektiert und protokolliert sein. Andernfalls wird eine Warnung ausgegeben.

Andererseits kann bei der thermoelektrischen Detektion eines nicht bestehenden oder verlorenen Reibkontakts des FSW-Schweisselements mit dem höher schmelzenden Werkstück ein Warnsignal ausgegeben werden. Durch einen nicht bestehenden oder verlorenen Reibkontakt kann z.B. ein etwaiger Verschleiss, insbesondere eine Verkürzung, des FSW-Schweisselements festgestellt werden.

Ein solcher Verschleiss kann durch einen Wechsel des FSW-Schweisswerkzeugs oder durch ein Nachstellen des bevorzugt stiftartigen FSW-Schweisselements beim verstellbaren FSW-Schweisswerkzeug behoben werden. Die automatische Handhabungseinrichtung kann das FSW-Schweisswerkzeug mit einer vorgegebenen Zustellkraft an die gestossenen Werkstücke andrücken. Hierbei kann insbesondere eine gegenüber dem bevorzugt vorstehenden, stiftförmigen FSW-Schweisselement verbreiterte Werkzeugschulter angedrückt werden.

Der elektrische Messkreis der thermoelektrischen Messeinrichtung, insbesondere Seebeck-Messeinrichtung, kann elektrisch und ggf. thermisch leitende Leitungen umfassen, die jeweils an einem ihrer Leitungsenden mit dem elektrischen Messelement verbunden sind. Die besagten Leitungen können am anderen Leitungsende mit beim Schweissprozess unterschiedlich temperierten Bereichen am Schweisswerkzeug und ggf. an einem Werkstück verbindbar oder verbunden sein.

Das besagte Leitungsende der einen Leitung ist z.B. mit dem FSW-Schweisselement verbunden. Dieses Leitungsende ist durch die Wärmeleitung des bevorzugt metallischen SW-Schweisselements höher temperiert als das Leitungsende der anderen Leitung, welches z.B. mit einer anderen und niedriger temperierten Stelle des FSW-Schweisswerkzeugs verbunden ist. Diese Stelle ist z.B. an einer bevorzugt drehfesten und elektrisch leitenden Werkzeugschulter angeordnet. Das Leitungsende der anderen Leitung kann alternativ oder zusätzlich mit einem Werkstück, insbesondere mit dem höher schmelzenden Werkstück, verbunden sein. An diesen beiden Leitungsenden bestehen somit unterschiedlich hohe Temperaturen, was mittels des Seebeck-Effekts durch das elektrische Messelement im Messkreis detektiert werden kann. Die Werkstücke können elektrisch leitend sein.

Die Steuerung kann ein Kontrollmodul aufweisen, welches z.B. als Softwaremodul und/oder als Hardwaremodul in die Steuerung integriert oder dieser zugeordnet sein kann. Das Kontrollmodul ist mit der Detektionseinrichtung, insbesondere der thermoelektrischen Messeinrichtung, verbunden. Eine signaltechnische Verbindung kann insbesondere mit dem elektrischen Messelement bestehen. Die Kommunikation und der Datenaustausch können leitungsgebunden oder bevorzugt drahtlos, z.B. per Funk, WLAN oder dgl. erfolgen.

Das Kontrollmodul kann bei einem thermoelektrisch detektierten Nichtbestehen oder Verlust des Reibkontakts zwischen dem FSW-Schweisselement und dem höher schmelzenden Werkstück eine Warnung ausgeben. Das Kontrollmodul kann alternativ oder zusätzlich eine nachführende Relativbewegung der automatischen Handhabungseinrichtung zur Herstellung des Reibschweisskontakts auslösen und ggf. regeln.

Die beanspruchte Handhabungseinrichtung zum Halten und Führen des FSW-Schweisswerkzeugs kann in unterschiedlicher Weise ausgebildet sein. Die Handhabungseinrichtung kann auch die Detektionseinrichtung mit dem FSW-Schweisswerkzeug mitführen.

Bevorzugt wird eine Ausbildung als mehrachsig beweglich angetriebener und programmierbarer Industrieroboter, insbesondere als Gelenkarmroboter oder Knickarmroboter. Die Handhabungseinrichtung, insbesondere der besagte Industrieroboter, führt und bewegt das FSW-Schweisswerkzeug und die mitgeführte Detektionseinrichtung entlang der FSW-Schweissbahn relativ zu den zu schweissenden Werkstücken. Vorzugsweise werden das FSW-Schweisswerkzeug und die mitgeführte Detektionseinrichtung relativ zu stationär angeordneten und gespannten Werkstücken bewegt. Die Kinematik kann auch anders, insbesondere umgekehrt sein. Für die Relativbewegung können auch zwei solche Industrieroboter eingesetzt werden, von denen einer das FSW-Schweisswerkzeug und die Detektionseinrichtung bewegt und der andere die zu schweissenden Werkstücke bewegt. Die automatische Handhabungseinrichtung kann ansonsten in anderer Weise, z.B. als CNC-gesteuerte FSW-Schweissmaschine, ausgebildet sein. Ein teilweise manueller Betrieb ist ebenfalls möglich.

Das FSW-Schweisswerkzeug und dessen FSW-Schweisselement sind ebenfalls in unterschiedlicher Weise ausgebildet. Das FSW-Schweisselement ist stiftartig ausgebildet. Es ist rotierend um seine Längsachse angetrieben. Das FSW-Schweisswerkzeug umfasstaußerdem die erwähnte Werkzeugschulter. Diese ist drehfest angeordnet. Das FSW-Schweisselement ragt axial über die Werkzeugschulter mit einer prozess- und werkstückbedingten Stiftlänge vor. Eine Stelleinrichtung ermöglicht ein Einstellen und ein evtl. verschleissbedingtes axiales Nachstellen dieser Stiftlänge.

In einer vorteilhaften Ausgestaltung kann der FSW-Schweissstift einen bevorzugt zylindrischen Schaft und einen endseitigen Stiftkopf mit einem prismatischen Kopfumfangsrand umfassen. Der Kopfumfangsrand kann z.B. drei gerade und um 120° versetzte Randflanken aufweisen. Ein FSW-Schweissstift kann auch eine den Schmelzefluss fördernde Formgebung, z.B. mit einem oder mehreren umfangsseitigen Gewindeabschnitten, Leitnuten oder dgl. haben.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine FSW-Schweisseinrichtung mit einer automatischen Handhabungseinrichtung, einem FSW-Schweisswerkzeug und einer mitgeführten Detektionseinrichtung sowie zwei unterschiedlich schmelzende und zu verschweissende Werkstücke,
- Figur 2:: eine Schemadarstellung des FSW-Schweisswerkzeugs und der Detektionseinrichtung beim Stumpfstoß-Reibschweissen von zwei unterschiedlich schmelzenden Werkstücken,
- Figur 3:: eine Draufsicht auf die Anordnung von Figur 2,
- Figur 4:: eine schematische Darstellung eines FSW-Schweisswerkzeugs und der Detektionseinrichtung bei einem Überlappstoß-Schweissen von unterschiedlich schmelzenden Werkstücken mit Reibkontakt zum höher schmelzenden Werkstück,
- Figur 5:: die Anordnung von Figur 4 mit einem verschlissenen FSW-Schweisselement ohne Reibkontakt zum höher schmelzenden Werkstück,
- Figur 6:: eine Draufsicht auf die Anordnungen von Figur 4 und 5 und
- Figur 7 bis 11:: Varianten eines stiftartigen FSW-Schweisselements in verschiedenen Ansichten.

Die Erfindung betrifft eine FSW-Schweisseinrichtung (1) und ein FSW-Schweissverfahren. Diese sind zum FSW-Schweissen von Werkstücken (2,3) mit wesentlich unterschiedlich hohen Schmelztemperaturen vorgesehen und ausgebildet.

Die Werkstücke (2,3) sind in den gezeigten Ausführungsbeispielen plattenartig, insbesondere als Bleche gestaltet. Die Werkstücke (2,3) sind vorzugsweise aus einem metallischen Material ausgebildet. Das eine Werkstück (2) hat in den gezeigten Ausführungsbeispielen die niedrigere Schmelztemperatur und Plastifizierungstemperatur, wobei das Werkstückmaterial z.B. als Leichtmetall, insbesondere Aluminimlegierung, oder in anderer geeigneter Weise ausgebildet ist. Das Werkstückmaterial des anderen Werkstücks (3) mit der höheren Schmelztemperatur und Plastifizierungstemperatur ist z.B. aus Stahl oder aus Gusseisen oder einem anderen bevorzugt ferritbasierten Metall oder in anderer geeigneter Weise ausgebildet. Die Werkstücke (2,3) sind thermisch und ggf. elektrisch leitend.

Die FSW-Schweisseinrichtung (1) umfasst ein FSW-Schweisswerkzeug (5) mit einem angetriebenen und bewegten, rotierenden, FSW-Schweisselement (6). Das FSW-Schweisselement (6) hat eine stift- oder stangenartige Form und ist als ein um seine Längsachse rotierender FSW-Schweissstift ausgebildet, der z.B. eine zylindrische oder konische Form besitzt. Der bevorzugt metallische FSW-Schweissstift ist thermisch leitend. Das FSW-Schweisswerkzeug (5) weist außerdem eine gegenüber dem stiftartigen FSW-Schweisselement (6) verbreiterte und an dessen oberen Ende angeordnete Werkzeugschulter (7) auf. Das FSW-Schweisselement (6) kann starr oder axial beweglich und drehbar mit der Werkzeugschulter (7) verbunden sein.

In der gezeigten Ausführung ist die z.B. zylindrische Werkzeugschulter (7) drehfest am FSW-Schweisswerkzeug (5) angeordnet. Das durch einen nicht dargestellten Antrieb drehend angetriebene FSW-Schweisselement (6) durchdringt die Werkzeugschulter (7) und ragt über diese axial um eine freie Stiftlänge hinaus, deren Größe von der Werkstückdicke und den Prozesserfordernissen für eine korrekte FSW-Schweissnaht (23) abhängt. Das FSW-Schweisselement (6) ist am FSW-Schweisswerkzeug (5) axial beweglich angeordnet und ist mit einer Stelleinrichtung (11) verbunden, welche die besagte freie Stiftlänge einstellt und bedarfsweise verstellt, z.B. bei einem kopfseitigen Verschleiss und einer Verkürzung nachstellt.

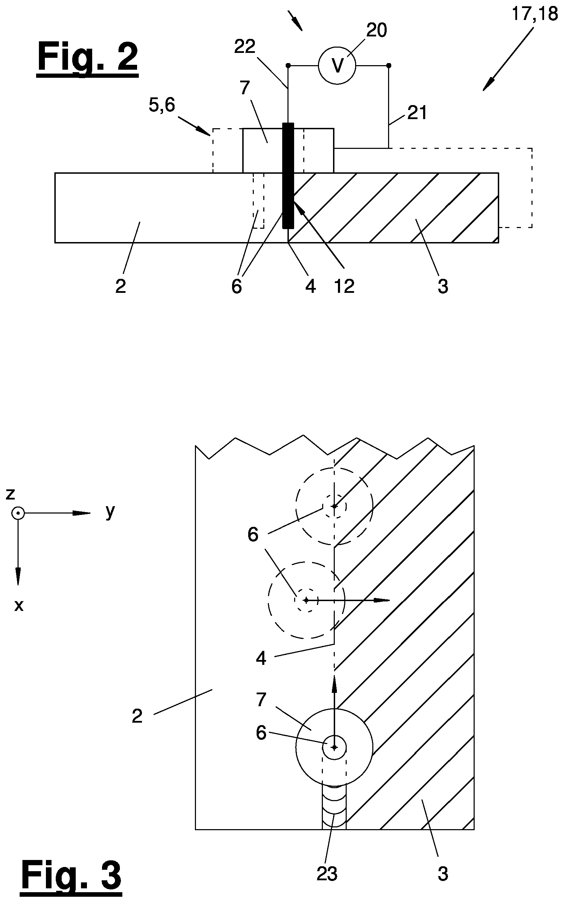

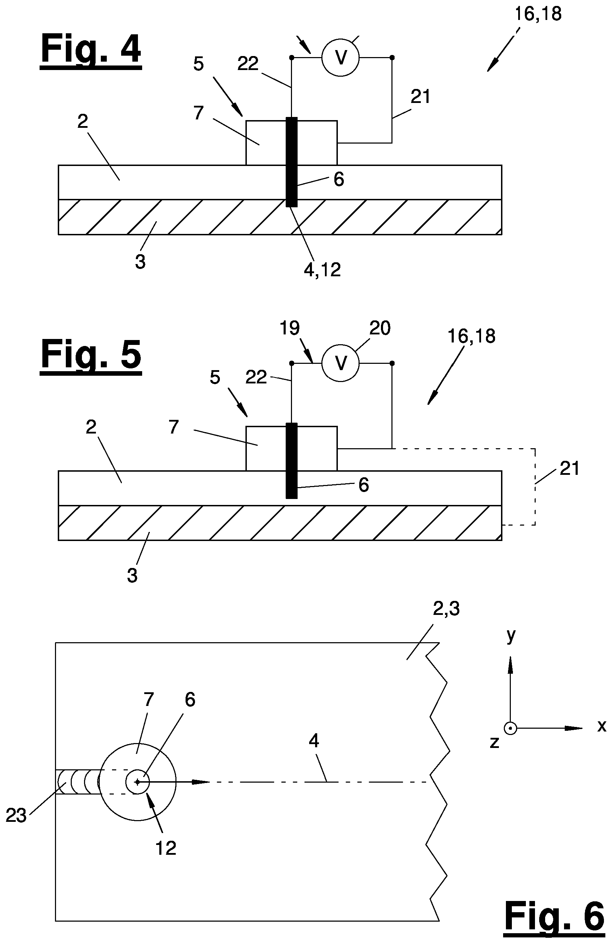

Zum FSW-Schweissen werden die zu verschweissenden Werkstücke (2,3) mit ihren Rändern in Kontakt gebracht und durch das rotierende FSW-Schweisselement (6) plastifiziert bzw. aufgeschmolzen und verbinden sich miteinander unter Bildung einer in Figur 3 und 6 gezeigten FSW-Schweissnaht (23). Das FSW-Schweisselement (6) tritt mit beiden Werkstücken an einer FSW-Reibstelle (12) in Eingriff und in reibenden Kontakt. Die Eingriffstiefe mit den Werkstücken (2,3) ist unterschiedlich gross, wobei zum niedriger schmelzenden Werkstück (2) eine deutlich höhere Eingriffstiefe als zum höher schmelzenden Werkstück (3) besteht. Die Eingriffstiefe am höher schmelzenden Werkstück (3) kann sehr gering sein und kann z.B. 0,3 mm betragen.

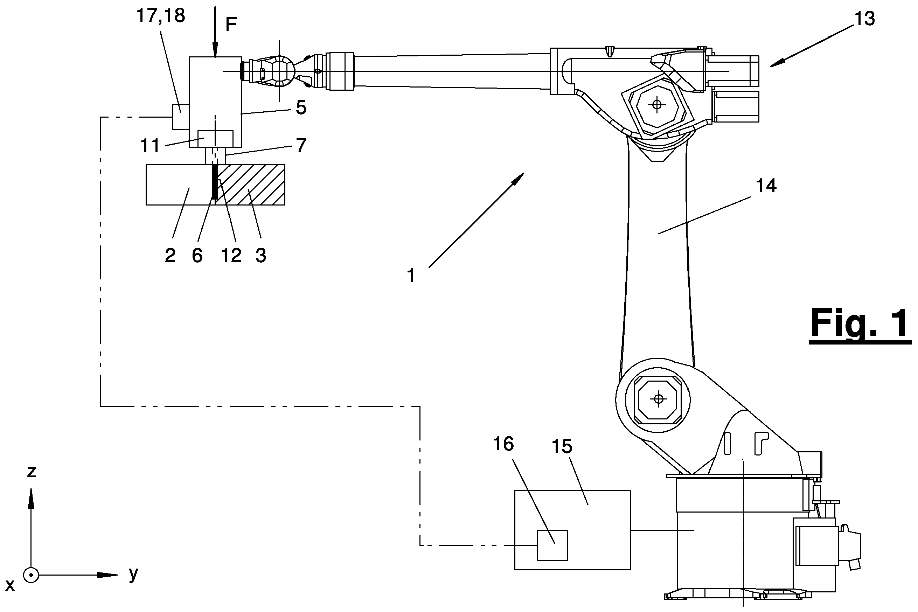

Die Art des Eingriffs an den Werkstücken (2,3) richtet sich nach der Art des Schweissstosses. In Figur 1 bis 3 ist ein Stumpfstoss dargestellt, an dem die beiden Werkstücke (2,3) an ihren einander zugekehrten Rändern stumpf zusammenstossen. An dieser Stossstelle und FSW-Reibstelle (12) ist das FSW-Schweisselement (6) eingeführt und tritt an seiner freien Stiftlänge und an deren Mantelbereich in reibenden Eingriff mit beiden Werkstücken (2,3). Die Eintauchtiefe des FSW-Schweisselements (6) hängt von der Werkstückdicke ab und ist so groß gewählt, dass eine vollständige Verschweissung beider Werkstücke (2,3) im Spalt an ihrer Kontaktstelle erfolgt.

Figur 4 bis 6 verdeutlichen die Variante eines Überlappstosses, bei dem die Werkstücke (2,3) mit Überlappung übereinander liegen. Das FSW-Schweisselement (6) durchdringt das niedriger schmelzende Werkstück (2) und tritt dann mit seinem Stirnende an der freien Stiftlänge mit dem höher schmelzenden Werkstück (3) an der FSW-Reibstelle (12) in Eingriff und Reibkontakt. Das besagte Stirnende kann als konische Spitze ausgeführt sein.

Beim FSW-Schweissprozess wird das FSW-Schweisselement (6) z.B. zuerst an das niedriger schmelzende Werkstück (2) zugestellt und in Eingriff gebracht, wobei anschließend durch eine entsprechende Bewegung der Reibkontakt und Eingriff mit dem höher schmelzenden Werkstück (3) hergestellt wird. Die Werkzeugschulter (7) wird in beiden Fällen gegen die Werkstücke (2,3) mit einer in z-Richtung bzw. Axialrichtung des FSW-Schweisselements (6) wirkenden Kraft (F) angedrückt.

Beim Stumpfstossschweissen wird das FSW-Schweisselement (6) umfangseitig mit einer quer und in y-Richtung wirkenden Kraft gegen die zu schweissende Stirnseite des höher schmelzenden Werkstücks (3) angedrückt. Beim Überlappstossschweissen wird das FSW-Schweisselement (6) stirnseitig in das höher schmelzende Werkstück (3) gedrückt. Beim FSW-Schweissprozess wird das bewegte, insbesondere rotierende FSW-Schweisselement (6) entlang einer vorgegebenen FSW-Schweissbahn (4) bewegt. Die FSW-Reibstelle (12) wandert dabei entlang der FSW-Schweissbahn (4).

Das FSW-Schweisswerkzeug (5) kann einen oder mehrere Sensoren aufweisen, die am FSW-Schweisselement (6) wirkende Kräfte und/oder Momente aufnehmen. Hierüber kann die Zustellkraft in z- und/oder y-Richtung gemessen werden.

Die FSW-Schweisseinrichtung (1) umfasst ferner eine Detektionseinrichtung (17), die dazu ausgebildet ist, beim FSW-Schweissprozess an der FSW-Reibstelle (12) einen Reibkontakt des FSW-Schweisselements (6) mit dem höher schmelzenden Werkstück (3) zu detektieren. Die Detektionseinrichtung (17) weist eine thermoelektrische Messeinrichtung (18) auf, die einen Reibkontakt des FSW-Schweisselements (6) mit dem höher schmelzenden Werkstück (3) detektiert mittels einer Erfassung der Reibtemperatur, und einer Änderung der Reibtemperatur, an den Werkstücken (2,3).

Die thermoelektrische Messeinrichtung (18) ist als Seebeck-Messeinrichtung ausgebildet und weist einen elektrischen Messkreis (19) mit elektrischen Leitungen (21,22) und mit einem elektrischen Messelement (20) auf. Sie ist in Figur 2, 4 und 5 schematisch dargestellt.

Die elektrischen Leitungen (21,22) sind mit dem elektrischen Messelement (20) mit ihrem jeweils einen Leitungsende mit dem elektrischen Messelement (20) verbunden. Mit ihrem jeweils anderen Leitungsende sind sie mit unterschiedlich temperierten Stellen am FSW-Schweisswerkzeug (5) verbunden. Die Temperaturunterschiede resultieren einerseits aus der hohen und bei Reibkontakt des FSW-Schweisselements (6) mit dem höher schmelzenden Werkstück (3) entstehenden Temperatur und andererseits aus der niedrigeren Normaltemperatur im Werkstückbereich. Das andere Leitungsende der Leitung (22) ist mit dem FSW-Schweisselement (6) verbunden und nimmt die beim besagten Reibkontakt entstehende hohe Temperatur auf. Das besagte andere Leitungsende der zweiten Leitung (21) ist mit der Werkzeugschulter (7) verbunden und nimmt an der Verbindungsstelle die niedrigere Temperatur auf. Das besagte Leitungsende der Leitung (21) kann alternativ auch mit einem Werkstück (2,3), insbesondere mit dem höher schmelzenden Werkstück (3), verbunden sein. Figur 5 verdeutlicht diese Leitungsverbindung.

Die FSW-Schweisseinrichtung umfasst außerdem eine vorzugsweise automatische Handhabungseinrichtung (13) mit einer Steuerung (14). Die Handhabungseinrichtung (13) hält und führt das FSW-Schweisswerkzeug (5) beim Schweissprozess und erzeugt eine Relativbewegung zwischen den zu schweissenden Werkstücken (2,3) und dem FSW-Schweisswerkzeug (5) entlang einer vorgegebenen FSW-Schweissbahn (4) mit Reibkontakt des FSW-Schweisselements (6) zu den unterschiedlich schmelzenden Werkstücken (2,3). Die Werkstücke (2,3) sind bevorzugt stationär angeordnet und in ihrer gegenseitigen FSW-Schweissposition gespannt.

In der gezeigten Ausführungsform ist die Handhabungseinrichtung (13) als mehrachsig beweglich angetriebener und programmierter Industrieroboter (14) ausgebildet, z.B. als sechsachsiger Gelenkarmroboter, an dessen mehrachsiger Roboterhand das FSW-Schweisswerkzeug (5) und die mitgeführte Detektionseinrichtung (17), die eine thermoelektrische Messeinrichtung (18) umfasst, montiert ist.

Die thermoelektrische Messeinrichtung (18), insbesondere das elektrische Messelement (20), ist mit der Steuerung (15) der automatischen Handhabungseinrichtung (13) verbunden. Die Steuerung (15) weist gemäß Figur 1 ein Kontrollmodul (16) auf, das mit der Detektionseinrichtung (17), insbesondere der thermoelektrischen Messeinrichtung (18), verbunden ist. Die thermoelektrische Messeinrichtung (18) und/oder das Kontrollmodul (16) detektieren über die Temperaturerfassung, ob beim FSW-Reibschweissprozess der gewünschte Reibkontakt des FSW-Schweisselements (6) mit dem höher schmelzenden Werkstück (3) besteht oder nicht.

Die Steuerung (15) beinhaltet Steuerprogramme, insbesondere eine Bahnsteuerung, für die Verfolgung der FSW-Schweissbahn (4). Die Steuerung (15) kann bei einem noch nicht bestehenden oder verlorenen Reibkontakt mit dem höher schmelzenden Werkstück (3) das FSW-Schweisswerkzeug (5) und dessen FSW-Schweisselement (6) nachführen und z.B. im Rahmen einer Prozessregelung wieder an die FSW-Schweissbahn und in Reibkontakt mit dem höher schmelzenden Werkstück (3) zurückführen.

Figur 2 und 3 verdeutlichen diesen Vorgang bei einem Stumpfschweissen. Wenn sich das FSW-Schweisselement (6) und die FSW-Reibstelle (12) an der gewünschten Position zwischen den Werkstücken (2,3) befinden und entlang der FSW-Schweissbahn(4) geführt werden, entsteht die aus den beiderseitigen und miteinander verbundenen Werkstückmaterialien gebildete FSW-Schweissnaht (23). Figur 3 zeigt im mittleren Teil eine seitliche Abweichung des FSW-Schweisselements (6) von der vorgegebenen FSW-Schweissbahn (4) und einen damit einhergehenden Verlust des Reibkontakts. Dieser äußert sich in einer erfassbaren Absenkung der am FSW-Schweisselement (6) einwirkenden Plastifizierungstemperatur im niedriger schmelzenden Werkstück (2). Dies wird durch die thermoelektrische Messeinrichtung (18) detektiert und an das Kontrollmodul (16) gemeldet, welches zugleich auch die aktuelle Roboterposition aufnimmt. Das Kontrollmodul (16) veranlasst dann eine durch einen Pfeil symbolisierte Rückführbewegung an die FSW-Schweissbahn (4) und in den gewünschten Reibkontakt des FSW-Schweisselements (6) mit dem höher schmelzenden Werkstück (3). Dies wird durch den bei Reibkontakt entstehenden Temperaturanstieg detektiert. Die vorprogrammierte FSW-Schweissbahn (4) kann dann weiter verfolgt werden.

Bei einem Überlappstossschweissen gemäß Figur 4 bis 6 wird das FSW-Schweisselement (6) durch das z.B. oben liegende niedriger schmelzende Werkstück (2) hindurch in Richtung zum höher schmelzenden Werkstück (3) zugestellt. Sobald an der stirnseitigen FSW-Reibstelle (12) der gewünschte Reibkontakt zum höher schmelzenden Werkstück (3) entsteht, wird dies durch den entsprechenden Temperaturanstieg von der thermoelektrischen Messeinrichtung (18) detektiert. Das FSW-Schweisselement (6) kann dann mit seiner FSW-Reibstelle (12) entlang der vorgegebenen FSW-Schweissbahn (4) bewegt werden.

Wenn z.B. gemäß Figur 5 bei der vorgegebenen Zustellung der gewünschte Reibkontakt des FSW-Schweisselements (6) mit dem höher schmelzenden Werkstück (3) nicht hergestellt wird und der erwartete Temperaturanstieg ausbleibt, kann dies unterschiedliche Ursachen haben. Eine Ursache kann in Dickentoleranzen des niedriger schmelzenden Werkstücks (2) bestehen. Diese können durch ein entsprechendes verstärktes Nachsetzen und eine Erhöhung der Andruckkraft (F) egalisiert werden. Eine andere Ursache kann in einem eventuellen stirnseitigen Verschleiss des FSW-Schweisselements (6) und in einer Verkürzung der vorgesehenen freien Stiftlänge liegen. Das FSW-Schweisselement (6) kann dann ausgetauscht oder manuell oder mittels der Stelleinrichtung (11) nachgestellt werden. Die Spitze des FSW-Schweisselements (6) definiert den Tool-Center-Point (TCP) eines robotergeführten Werkzeugs. Bei einem Wechsel oder einem Nachstellen des FSW-Schweisselements (6) wird der TCP entsprechend in der Steuerung (15) nachgeführt.

Wenn beim Überlappstossschweissen entlang der FSW-Schweissbahn (4) der besagte Reibkontakt mit dem höher schmelzenden Werkstück (3) verloren geht, z.B. durch Toleranzen des niedriger schmelzenden Werkstücks (2) oder durch einen Verschleiss des FSW-Schweisselements (6), kann einerseits eine Warnung vom Kontrollmodul (16) ausgegeben werden. Andererseits kann das FSW-Halteelement (6) durch die Handhabungseinrichtung (13) in z-Richtung nachgeführt und verstärkt angedrückt werden, bis erneut der besagte Reibkontakt hergestellt wird oder bei Nichterreichen innerhalb einer vorgegebenen Zeitspanne das FSW-Schweisselement (6) axial nachgestellt wird. In diesen Fällen kann auch ein Warnsignal ausgegeben werden und/oder auch der Schweissprozess gestoppt werden.

Die Detektionseinrichtung (17) kann weitere Komponenten zur Erfassung des gewünschten Reibkontakts zwischen dem FSW-Schweisselement (6) und dem höher schmelzenden Werkstück (3) aufweisen. Letzteres hat in der Regel auch eine größere Härte und Festigkeit. Eine solche Komponente kann z.B. von dem vorgenannten Kräfte- und/oder Momente aufnehmenden Sensor gebildet werden. Bei Auftreffen des rotierenden FSW-Schweisselements (6) am höher schmelzenden Werkstück (3) steigt die Reaktionskraft an und kann sensorisch erfasst werden.

Eine andere Komponente der Detektionseinrichtung (17) kann von einem Schwingungssensor gebildet werden. Dieser kann veränderte und insbesondere verstärkte Schwingungen aufnehmen, die bei dem besagten Reibkontakt mit dem höher schmelzenden und härteren Werkstück (3) auftreten. Die Schwingungserzeugung kann begünstigt und verstärkt werden, z.B. durch entsprechende Formgebung des höher schmelzenden Werkstücks (3) an der vorgesehenen FSW-Reibstelle (12) und der vorgegebenen FSW-Schweissbahn (4). Eine andere Möglichkeit ist eine schwingungsgünstige Gestaltung des FSW-Schweisselements (6).

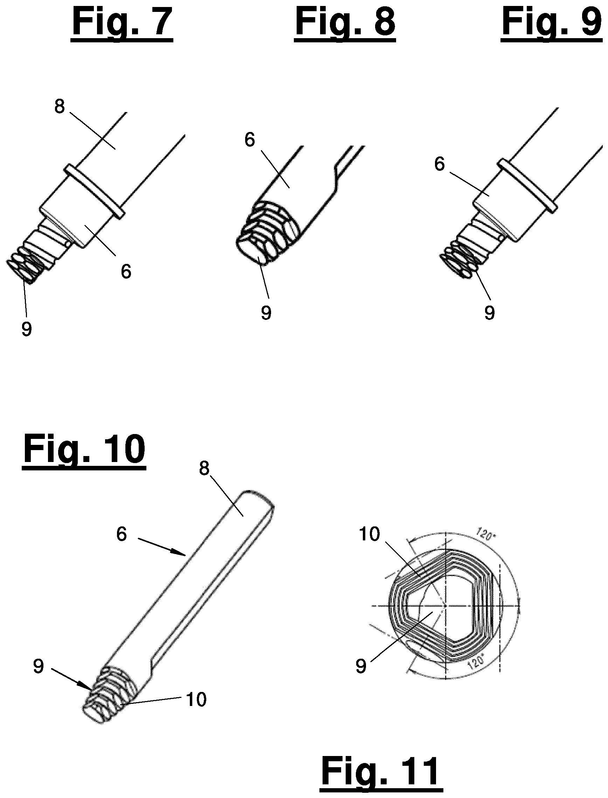

Figur 7 bis 11 verdeutlichen verschiedene Ausführungsformen von stiftartigen und rotierend angetriebenen FSW-Schweisselementen (6) bzw. Schweissstiften. Diese weisen einen Schaft (8) mit einem Stiftkopf (9) am stirnseitigen Ende auf. Der Stiftkopf (9) ist derjenige Bereich, der in Eingriff und Reibkontakt mit den zu schweissenden Werkstücken (2,3) kommt und durch Reibung die benachbarten Werkstückbereiche plastifiziert, insbesondere aufschmilzt. Der Stiftkopf (9) kann eine zylindrische oder konische Form haben. Er kann am Außenumfang eine den plastifizierten Massefluss fördernde Formgebung haben, die z.B. von ein oder mehreren umfangsseitigen Gewindeabschnitten, Leitnuten oder dergleichen gebildet wird. Der Schaft (8) hat z.B. eine bereichsweise zylindrische Form und kann eine oder mehrere umfangsseitige Abflachungen zur formschlüssigen Kraftübertragung durch den Drehantrieb aufweisen. Figur 7 und 9 verdeutlichen außerdem die Möglichkeit, eine Werkzeugschulter (7) am FSW-Schweisselement (6) umfangsseitig auszubilden und bei der Antriebsbewegung mit zu bewegen.

Figur 8, 10 und 11 verdeutlichen eine Stiftform, die für das Überlappstossschweissen und eine stirnseitige FSW-Reibstelle (12) bzw. einen stirnseitigen Reibkontakt mit dem höher schmelzenden Werkstück (3) günstig sind. Der Stiftkopf (9) kann einen prismatischen Kopfumfangsrand (10) haben. Dieser kann z.B. drei gerade und um 120° versetzte Randflanken umfassen. Günstig ist außerdem eine konische und in Richtung zum Schaft (8) im Durchmesser zunehmende Form des Stiftkopfs (9).

Abwandlungen der gezeigten und beschriebenen Ausführungsformen sind in verschiedener Weise und im Rahmen der Ansprüche möglich. Insbesondere können die Merkmale der verschiedenen Ausführungsvarianten miteinander kombiniert und bedarfsweise vertauscht werden. Das FSW-Schweisselement (6) kann z.B. beim FSW-Stumpfstossschweissen und/oder beim FSW-Kehlnahtschweissen direkt in den Stoss- und Kontaktbereich zwischen den zu schweissenden Werkstücken zugestellt und mit den Werkstücken gleichzeitig in Reibkontakt gebracht werden.

### BEZUGSZEICHENLISTE

- 1: Schweisseinrichtung, FSW-Schweisseinrichtung
- 2: Werkstück niedriger schmelzend
- 3: Werkstück höher schmelzend
- 4: FSW-Schweissbahn
- 5: FSW-Schweisswerkzeug
- 6: FSW-Schweisselement, FSW-Schweissstift
- 7: Werkzeugschulter
- 8: Schaft
- 9: Stiftkopf
- 10: Kopfumfangsrand
- 11: Stelleinrichtung
- 12: FSW-Reibstelle
- 13: Handhabungseinrichtung
- 14: Industrieroboter, Knickarmroboter
- 15: Steuerung
- 16: Kontrollmodul
- 17: Detektionseinrichtung
- 18: thermoelektrische Messeinrichtung
- 19: elektrischer Messkreis
- 20: elektrisches Messelement
- 21: Leitung elektrisch
- 22: Leitung elektrisch
- 23: FSW-Schweissnaht

## Patentansprüche

1. Schweisseinrichtung zum FSW-Schweissen von Werkstücken (2,3) mit unterschiedlich hohen Reibschmelztemperaturen, wobei die FSW-Schweisseinrichtung (1) ein FSW-Schweisswerkzeug (5) mit einem angetriebenen und rotierenden, FSW-Schweisselement (6) und eine Detektionseinrichtung (17) aufweist, die dazu ausgebildet ist, beim FSW-Schweissprozess an der Reibschweissstelle (12) einen Reibkontakt des FSW-Schweisselements (6) mit dem höherschmelzenden Werkstück (3) zu detektieren,
- wobei die Detektionseinrichtung (17) eine thermoelektrische Messeinrichtung (18) umfasst, die einen Reibkontakt des FSW-Schweisselements (6) mit dem höherschmelzenden Werkstück (3) mittels einer Erfassung einer Änderung der Reibtemperatur, an den Werkstücken (2,3) detektiert,
- wobei die Schweißeinrichtung (1) dazu ausgebildet ist, beide Werkstücke (2, 3) an der FSW-Reibstelle (12) zu plastifizieren und mit dem FSW-Schweisselement (6) auch das höher schmelzende Werkstück (3) hinreichend reibend zu kontaktieren und an der FSW-Reibstelle (12) zu plastifizieren,
**dadurch gekennzeichnet, dass**
das FSW-Schweisswerkzeug das drehend angetriebene, stiftartige FSW-Schweisselement (6) und eine das vorstehende FSW-Schweisselement (6) umgebende, drehfest am FSW-Schweißwerkzeug (5) angeordnete Werkzeugschulter (7) sowie eine Stelleinrichtung (11) für die axiale vorstehende Länge des FSW-Schweisselements (6) aufweist.

2. Schweisseinrichtung nach Anspruch 1, **dadurch gekennzeichnet, dass** die FSW-Schweisseinrichtung (1) eine automatische Handhabungseinrichtung (13) mit einer Steuerung (14) aufweist, die beim Schweissprozess das FSW-Schweisswerkzeug (5) hält und führt sowie eine Relativbewegung zwischen den zu schweissenden Werkstücken (2,3) und dem FSW-Schweisswerkzeug (5) entlang einer vorgegebenen Schweissbahn (4) mit Reibkontakt des FSW-Schweisselements (6) zu den unterschiedlich reibschmelzenden Werkstücken (2,3) erzeugt.

3. Schweisseinrichtung nach Anspruch 2, **dadurch gekennzeichnet, dass** die thermoelektrische Messeinrichtung (18) mit der Steuerung (15) der automatischen Handhabungseinrichtung (13) verbunden ist.

4. Schweisseinrichtung nach nach Anspruch 1, 2 oder 3, **dadurch gekennzeichnet, dass** die thermoelektrische Messeinrichtung (18) als Seebeck-Messeinrichtung ausgebildet ist und einen elektrischen Messkreis (19) mit einem elektrischen Messelement (20) aufweist.

5. Schweisseinrichtung nach Anspruch 4, **dadurch gekennzeichnet, dass** der elektrische Messkreis (19) elektrisch und thermisch leitende Leitungen (21,22) umfasst, die jeweils an einem Leitungsende mit dem elektrischen Messelement (20) verbunden sind und die jeweils am anderen Leitungsende mit beim Schweissprozess unterschiedlich temperierten Bereichen am Schweisswerkzeug (5) und ggf. an einem Werkstück (2,3) verbindbar oder verbunden sind.

6. Schweisseinrichtung nach einem der Ansprüche 2 bis 5, **dadurch gekennzeichnet, dass** die Steuerung (15) ein mit der Detektionseinrichtung (17) verbundenes Kontrollmodul (16) aufweist, welches beim Schweissprozess und bei einem thermoelektrisch detektierten Nichtbestehen oder Verlusts des Reibkontakts zwischen dem FSW-Schweisselement (6) und dem höherschmelzenden Werkstück (3) eine Warnung ausgibt und/oder eine nachführende Relativbewegung der Handhabungseinrichtung (13) zur Herstellung des Reibschweisskontakts auslöst und ggf. regelt.

7. Schweisseinrichtung nach einem der Ansprüche 2 bis 6, **dadurch gekennzeichnet, dass** die Handhabungseinrichtung (13) als mehrachsig beweglich angetriebener und programmierbarer Industrieroboter (14) ausgebildet ist, der das FSW-Schweisswerkzeug (5) und die mitgeführte Detektionseinrichtung (17) entlang der Schweissbahn (4) relativ zu den zu schweissenden Werkstücken (2,3) führt und bewegt.

8. Verfahren zum FSW-Schweissen von Werkstücken (2,3) mit unterschiedlich hohen Reibschmelztemperaturen mittels einer FSW-Schweisseinrichtung (1), wobei die FSW-Schweisseinrichtung (1) ein FSW-Schweisswerkzeug (5) mit einem angetriebenen und rotierenden, FSW-Schweisselement (6) und eine Detektionseinrichtung (17) aufweist, die beim Schweissprozess an der Reibschweissstelle (12) einen Reibkontakt des FSW-Schweisselements (6) mit dem höherschmelzenden Werkstück (3) detektiert, wobei die Detektionseinrichtung (17) eine thermoelektrische Messeinrichtung (18) umfasst, die einen Reibkontakt des FSW-Schweisselements (6) mit dem höherschmelzenden Werkstück (3) mittels einer Erfassung einer Änderung der Reibtemperatur, an den Werkstücken (2,3) detektiert, wobei beide Werkstücke (2, 3) an der FSW-Reibstelle (12) plastifziert werden und dass mit dem FSW-Schweisselement (6) auch das höher schmelzende Werkstück (3) hinreichend reibend kontaktiert und an der FSW-Reibstelle (12) plastifiziert wird, **dadurch gekennzeichnet, dass** das FSW-Schweisswerkzeug (5) das drehend angetriebene, stiftartige FSW-Schweisselement (6) und eine das vorstehende FSW-Schweisselement (6) umgebende, drehfest am FSW-Schweisswerkzeug (5) angeordnete Werkzeugschulter (7) sowie eine Stelleinrichtung (11) für die axiale vorstehende Länge des FSW-Schweisselements (6) aufweist.

9. Schweissverfahren nach Anspruch 8, **dadurch gekennzeichnet, dass** die FSW-Schweisseinrichtung (1) eine automatische Handhabungseinrichtung (13) mit einer Steuerung (14) aufweist, die beim Schweissprozess das FSW-Schweisswerkzeug (5) hält und führt sowie eine Relativbewegung zwischen den zu schweissenden Werkstücken (2,3) und dem FSW-Schweisswerkzeug (5) entlang einer vorgegebenen Schweissbahn (4) mit Reibkontakt des FSW-Schweisselements (6) zu den unterschiedlich reibschmelzenden Werkstücken (2,3) erzeugt.

10. Schweissverfahren nach Anspruch 8 oder 9, **dadurch gekennzeichnet, dass** die thermoelektrische Messeinrichtung (18) beim Schweissprozess die Reibtemperatur, insbesondere eine Änderung der Reibtemperatur, mittels des Seebeck-Effekts erfasst.

11. Schweissverfahren nach Anspruch 8, 9 oder 10, **dadurch gekennzeichnet, dass** die thermoelektrische Messeinrichtung (18) beim Schweissprozess das Bestehen oder Fehlen des Reibkontakts des FSW-Schweisselements (6) mit dem höherschmelzenden Werkstück (3) thermoelektrisch detektiert und an ein Kontrollmodul (16) in der Steuerung (14) der automatischen Handhabungseinrichtung (13) meldet.

12. Schweissverfahren nach Anspruch 11, **dadurch gekennzeichnet, dass** die FSW-Schweisseinrichtung (1) beim Schweissen eines Überlappstosses der Werkstücke (2,3) mittels einer thermoelektrischen Detektion eines fehlenden Reibkontakts mit dem höherschmelzenden Werkstück (3) einen Verschleiss des FSW-Schweisselements (6) erfasst und ein Warnung ausgibt oder das FSW-Schweisselement (6) zur Herstellung des Reibschweisskontakts nachführt.

13. Schweissverfahren nach Anspruch 11, **dadurch gekennzeichnet, dass** die FSW-Schweisseinrichtung (1), insbesondere die Handhabungseinrichtung (13), beim Schweissen eines Stumpfstosses der Werkstücke (2,3) ein Abweichen des FSW-Schweisselements (6) von der vorgegebenen Schweissbahn (4) durch die thermoelektrische Detektion eines fehlenden Reibschweisskontakts am höherschmelzenden Werkstück (3) erfasst und das FSW-Schweisselement (6) geregelt an die vorgegebene Schweissbahn (4) nachführt.

## Claims

1. Welding device for the friction stir welding, FSW, of workpieces (2, 3) with different friction melting temperatures, the FSW device (1) comprising an FSW tool (5), which has a driven rotary FSW element (6), and a detection device (17) which is designed to detect a frictional contact between the FSW element (6) and the higher-melting workpiece (3) at the friction weld point (12) during the FSW process,
- wherein the detection device (17) comprises a thermoelectric measuring device (18) that detects a frictional contact between the FSW element (6) and the higher-melting workpiece (3) by recording a change in the frictional temperature on the workpieces (2, 3),
- wherein the welding device (1) is designed to plasticize the two workpieces (2, 3) at the FSW friction point (12) and also, by way of the FSW element (6), come into sufficient frictional contact with the higher-melting workpiece (3) and plasticize the higher-melting workpiece at the FSW friction point (12), **characterized in that** the FSW tool comprises the rotationally driven, pin-like FSW element (6), a tool shoulder (7) which surrounds the protruding FSW element (6) and is non-rotatably arranged on the FSW tool (5), and an adjustment device (11) for the axially protruding length of the FSW element (6).

2. Welding device according to Claim 1, **characterized in that** the FSW device (1) comprises an automatic handling device (13) having a controller (14), which during the welding process holds and guides the FSW tool (5) and generates a relative movement between the workpieces (2, 3) to be welded and the FSW tool (5) along a predefined welding path (4) with frictional contact between the FSW element (6) and the differently frictionally melting workpieces (2, 3).

3. Welding device according to Claim 2, **characterized in that** the thermoelectric measuring device (18) is connected to the controller (15) of the automatic handling device (13).

4. Welding device according to according to Claim 1, 2 or 3, **characterized in that** the thermoelectric measuring device (18) is in the form of a Seebeck measuring device and has an electrical measuring circuit (19) with an electric measuring element (20).

5. Welding device according to Claim 4, **characterized in that** the electrical measuring circuit (19) comprises electrically and thermally conductive lines (21, 22) each connected at one line end to the electric measuring element (20) and each being connected or connectable at the other line end to regions on the welding tool (5) and, if appropriate, on a workpiece (2, 3) that are temperature-controlled differently during the welding process.

6. Welding device according to one of Claims 2 to 5, **characterized in that** the controller (15) has a monitoring module (16) which is connected to the detection device (17) and, during the welding process and if it is thermoelectrically detected that the frictional contact between the FSW element (6) and the higher-melting workpiece (3) does not exist or has been lost, issues a warning and/or triggers and, if appropriate, regulates a readjusting relative movement of the handling device (13) for establishing the friction welding contact.

7. Welding device according to one of Claims 2 to 6, **characterized in that** the handling device (13) is in the form of a multiaxially movably driven and programmable industrial robot (14), which guides and moves the FSW tool (5) and the accompanying detection device (17) along the welding path (4) relative to the workpieces (2, 3) to be welded.

8. Method for the friction stir welding of workpieces (2, 3) with different friction melting temperatures by means of an FSW device (1), the FSW device (1) comprising an FSW tool (5), which has a driven rotary FSW element (6), and a detection device (17) which detects a frictional contact between the FSW element (6) and the higher-melting workpiece (3) at the friction weld point (12) during the welding process, wherein the detection device (17) comprises a thermoelectric measuring device (18) that detects a frictional contact between the FSW element (6) and the higher-melting workpiece (3) by measuring a change in the frictional temperature on the workpieces (2, 3), wherein the two workpieces (2, 3) are plasticized at the FSW friction point (12) and in that, by way of the FSW element (6), the higher-melting workpiece (3) is also sufficiently frictionally contacted and plasticized at the FSW friction point (12), **characterized in that** the FSW tool (5) comprises the rotationally driven, pin-like FSW element (6), a tool shoulder (7) which surrounds the protruding FSW element (6) and is non-rotatably arranged on the FSW tool (5), and an adjustment device (11) for the axially protruding length of the FSW element (6).

9. Welding method according to Claim 8, **characterized in that** the FSW device (1) comprises an automatic handling device (13) having a controller (14), which during the welding process holds and guides the FSW tool (5) and generates a relative movement between the workpieces (2, 3) to be welded and the FSW tool (5) along a predefined welding path (4) with frictional contact between the FSW element (6) and the differently frictionally melting workpieces (2, 3).

10. Welding method according to Claim 8 or 9, **characterized in that** the thermoelectric measuring device (18) measures the frictional temperature, in particular a change in the frictional temperature, by means of the Seebeck effect during the welding process.

11. Welding method according to Claim 8, 9 or 10, **characterized in that**, during the welding process, the thermoelectric measuring device (18) thermoelectrically detects the presence or absence of the frictional contact between the FSW element (6) and the higher-melting workpiece (3) and notifies a monitoring module (16) in the controller (14) of the automatic handling device (13) .

12. Welding method according to Claim 11, **characterized in that**, when a lap weld is being produced between the workpieces (2, 3), the FSW device (1) measures a wear on the FSW element (6) by thermoelectrically detecting an absence of frictional contact with the higher-melting workpiece (3) and issues a warning or readjusts the FSW element (6) to establish the friction welding contact.

13. Welding method according to Claim 11, **characterized in that**, when a butt joint is being welded between the workpieces (2, 3), the FSW device (1), in particular the handling device (13), measures a deviation of the FSW element (6) from the predefined welding path (4) by thermoelectrically detecting an absence of friction welding contact on the higher-melting workpiece (3) and regulates a readjustment of the FSW element (6) to the predefined welding path (4).

## Revendications

1. Dispositif de soudage pour le soudage FSW (par friction-malaxage) de pièces (2, 3) ayant des températures différentes de fusion par friction, le dispositif de soudage FSW (1) comprenant un outil (5) de soudage FSW doté d'un élément (6) de soudage FSW entraîné et rotatif, et un dispositif de détection (17) qui est conçu pour, lors du processus de soudage FSW, détecter au niveau du point de soudage par friction (12), un contact de friction de l'élément (6) de soudage FSW avec la pièce (3) à point de fusion plus élevé,
- le dispositif de détection (17) comprenant un dispositif (18) de mesure thermoélectrique qui détecte un contact par friction de l'élément (6) de soudage FSW avec la pièce (3) à point de fusion plus élevé par une détection d'une variation de la température de friction sur les pièces (2, 3),
- le dispositif de soudage (1) étant conçu pour rendre plastiques les deux pièces (2, 3) au niveau du point de friction FSW (12) et pour également mettre la pièce à point de fusion plus élevé (3) en contact avec l'élément (6) de soudage FSW, en frottant suffisamment, et pour la rendre plastique au niveau du point de friction FSW (12), **caractérisé en ce que** l'outil de soudage FSW comprend l'élément (6) de soudage FSW en forme de tige entraîné en rotation et un épaulement d'outil (7) qui entoure l'élément (6) de soudage FSW en saillie et qui est disposé solidaire en rotation sur l'outil (5) de soudage FSW, ainsi qu'un dispositif de réglage (11) pour la longueur axiale en saillie de l'élément (6) de soudage FSW.

2. Dispositif de soudage selon la revendication 1, **caractérisé en ce que** le dispositif de soudage FSW (1) comprend un dispositif de manipulation automatique (13) avec un système de commande (14) qui maintient et guide l'outil (5) de soudage FSW pendant le processus de soudage et assure un mouvement relatif entre les pièces (2, 3) à souder et l'outil (5) de soudage FSW le long d'une trajectoire de soudage prédéfinie (4) avec contact par friction de l'élément (6) de soudage FSW avec les pièces (2, 3) à souder par friction différemment.

3. Dispositif de soudage selon la revendication 2, **caractérisé en ce que** le dispositif (18) de mesure thermoélectrique est relié au système de commande (15) du dispositif de manipulation automatique (13).

4. Dispositif de soudage selon les revendications 1, 2 ou 3, **caractérisé en ce que** le dispositif (18) de mesure thermoélectrique est réalisé sous forme de dispositif de mesure Seebeck et comprend un circuit (19) de mesure électrique avec un élément (20) de mesure électrique.

5. Dispositif de soudage selon la revendication 4, **caractérisé en ce que** le circuit (19) de mesure électrique comprend des lignes (21, 22) électriquement et thermiquement conductrices qui sont reliées à l'élément (20) de mesure électrique chacune à une extrémité de ligne et qui, chacune à l'autre extrémité de ligne, sont reliées ou aptes à être reliées à des zones de l'outil de soudage (5), et, le cas échéant, à une pièce (2, 3), qui sont à des températures différentes pendant le processus de soudage.

6. Dispositif de soudage selon l'une des revendications 2 à 5, **caractérisé en ce que** le système de commande (15) comprend un module de commande (16) relié au dispositif de détection (17), qui, lors du processus de soudage et en cas d'une absence ou d'une perte du contact par friction, détectée de manière thermoélectrique, entre l'élément (6) de soudage FSW et la pièce (3) à point de fusion plus élevé, émet un avertissement, et/ou déclenche et, le cas échéant, régule un mouvement relatif de suivi du dispositif de manipulation (13) afin d'établir le contact de soudage par friction.

7. Dispositif de soudage selon l'une des revendications 2 à 6, **caractérisé en ce que** le dispositif de manipulation (13) est réalisé sous la forme d'un robot industriel (14) programmable, entraîné de manière mobile sur plusieurs axes, qui guide et déplace l'outil (5) de soudage FSW et le dispositif de détection associé (17) par rapport aux pièces (2, 3) à souder, le long du trajet de soudage (4).

8. Procédé de soudage FSW (par friction-malaxage) de pièces (2, 3) ayant des températures de fusion par friction différentes, au moyen d'un dispositif de soudage FSW (1), le dispositif de soudage FSW (1) comprenant un outil (5) de soudage FSW doté d'un élément (6) de soudage FSW entraîné et rotatif, et un dispositif de détection (17) qui, lors du processus de soudage, détecte au niveau du point de soudage par friction (12), un contact par friction de l'élément (6) de soudage FSW avec la pièce (3) à point de fusion plus élevé, le dispositif de détection (17) comprenant un dispositif (18) de mesure thermoélectrique qui détecte un contact par friction de l'élément (6) de soudage FSW avec la pièce (3) à point de fusion plus élevé au moyen d'une détection d'une variation de la température de friction sur les pièces (2, 3), les deux pièces (2, 3) étant rendues plastiques au niveau du point de friction FSW (12), et la pièce à plus haut point de fusion (3) est également mise en contact de friction suffisant avec l'élément de soudage FSW (6) et est rendue plastique au niveau du point de friction FSW (12), **caractérisé en ce que** l'outil (5) de soudage FSW comprend un élément (6) de soudage FSW en forme de tige entraîné en rotation et un épaulement d'outil (7) entourant l'élément (6) de soudage FSW en saillie, agencé de manière solidaire en rotation sur l'outil (5) de soudage FSW, ainsi qu'un dispositif de réglage (11) de la longueur axiale de l'élément (6) de soudage FSW.

9. Procédé de soudage selon la revendication 8, **caractérisé en ce que** le dispositif de soudage FSW (1) comprend un dispositif de manipulation automatique (13) équipé d'un système de commande (14) qui, pendant le processus de soudage, maintient et guide l'outil (5) de soudage FSW et assure un mouvement relatif entre les pièces à souder (2, 3) et l'outil (5) de soudage FSW le long d'un trajet de soudage prédéfini (4) avec contact de friction de l'élément (6) de soudage FSW avec les pièces (2, 3) à souder par friction différemment.

10. Procédé de soudage selon la revendication 8 ou la revendication 9, **caractérisé en ce que** le dispositif (18) de mesure thermoélectrique détecte, pendant le processus de soudage, la température de friction, en particulier une variation de la température de friction, au moyen de l'effet Seebeck.

11. Procédé de soudage selon la revendication 8, 9 ou 10, **caractérisé en ce que** le dispositif (18) de mesure thermoélectrique détecte thermoélectriquement, pendant le processus de soudage, l'existence ou l'absence du contact de friction de l'élément (6) de soudage FSW avec la pièce (3) à point de fusion plus élevé et la signale à un module de commande (16) dans le système de commande (14) du dispositif de manipulation automatique (13).

12. Procédé de soudage selon la revendication 11, **caractérisé en ce que** le dispositif de soudage FSW (1), lors du soudage d'un joint à recouvrement des pièces (2, 3), détecte une usure de l'élément (6) de soudage FSW, par une détection thermoélectrique d'un manque de contact de friction avec la pièce (3) à point de fusion plus élevé, et émet un avertissement ou ajuste l'élément (6) de soudage FSW de manière à établir le contact de soudage par friction.

13. Procédé de soudage selon la revendication 11, **caractérisé en ce que** le dispositif de soudage FSW (1), en particulier le dispositif de manipulation (13), lors du soudage d'un joint bout à bout des pièces (2, 3), détecte un écart de l'élément (6) de soudage FSW par rapport au trajet de soudage prédéfini (4) par la détection thermoélectrique d'un manque de contact de soudage par friction sur la pièce (3) à point de fusion plus élevé, et **en ce que** l'élément (6) de soudage FSW est ramené de manière régulée sur la trajectoire de soudage prédéfinie (4).
